(19) Europäisches Patentamt
European Patent Office
Office européen des brevets

(11) **EP 3 930 045 A1**

(12) **DEMANDE DE BREVET EUROPEEN**

(43) Date de publication:
**29.12.2021 Bulletin 2021/52**

(21) Numéro de dépôt: **21181821.6**

(22) Date de dépôt: **25.06.2021**

(51) Int Cl.:
*H01M 4/133* (2010.01)          *H01M 4/136* (2010.01)
*H01M 4/1393* (2010.01)         *H01M 4/1397* (2010.01)
*H01M 4/36* (2006.01)           *H01M 4/58* (2010.01)
*H01M 4/583* (2010.01)          *H01M 10/0562* (2010.01)
*H01M 4/134* (2010.01)          *H01M 4/38* (2006.01)
*H01M 4/485* (2010.01)          *H01M 4/587* (2010.01)
*H01M 4/62* (2006.01)           *H01M 4/02* (2006.01)

(84) Etats contractants désignés:
**AL AT BE BG CH CY CZ DE DK EE ES FI FR GB
GR HR HU IE IS IT LI LT LU LV MC MK MT NL NO
PL PT RO RS SE SI SK SM TR**
Etats d'extension désignés:
**BA ME**
Etats de validation désignés:
**KH MA MD TN**

(30) Priorité: **26.06.2020 FR 2006744**

(71) Demandeur: **SAFT**
**92300 Lavallois-Perret (FR)**

(72) Inventeurs:
• **JORDY, Christian**
**33440 ST LOUIS DE MONTFERRAND (FR)**
• **PELE, Vincent**
**33300 BORDEAUX (FR)**

(74) Mandataire: **Lavoix**
**2, place d'Estienne d'Orves**
**75441 Paris Cedex 09 (FR)**

(54) **ELECTRODE NÉGATIVE POREUSE**

(57) La présente invention concerne une électrode négative Li-free constituée d'électrolyte solide et de particules de carbone, ainsi que sa préparation et les éléments électrochimiques les comprenant.

EP 3 930 045 A1

**Description**

La présente invention concerne le domaine du stockage de l'énergie, et plus précisément les accumulateurs, notamment de type lithium.

Les accumulateurs rechargeables lithium-ion offrent en effet d'excellentes densités énergétique et volumique et occupent aujourd'hui une place prépondérante sur le marché de l'électronique portable, des véhicules électriques et hybrides ou encore des systèmes stationnaires de stockage de l'énergie.

Les électrolytes solides offrent de plus une amélioration notable en termes de sécurité dans la mesure où ils présentent un risque d'inflammabilité bien moindre que les électrolytes liquides.

Le fonctionnement des accumulateurs au lithium est basé sur l'échange réversible de l'ion lithium entre une électrode positive et une électrode négative, séparées par un électrolyte, le lithium se déposant à l'électrode négative pendant le fonctionnement en charge.

Il est donc désirable de favoriser le dépôt du lithium et d'en obtenir un dépôt le plus homogène possible.

Hitz et al (Materials today, vol.22, 2019, Pages 50-57) décrit des batteries tout solide présentant une architecture à 3 couches « poreuse-dense-poreuse » comprenant une couche dense entre deux couches poreuses d'électrolyte de type oxyde. Néanmoins, la mise en forme des électrolytes de type oxyde nécessite une étape de frittage à haute température rendant leur emploi difficile à l'échelle industrielle. De plus, les électrodes négatives qui y sont décrites ne contiennent pas de carbone.

Zhao et al (Nano Energy 62 (2019) 55-63) décrit un réseau poreux lithiophile à base de nanofeuillets (« nanosheets ») verticaux de ZnO sur une mousse de Ni pour guider le dépôt/retrait homogène de Li lors des cycles mais ne décrit aucunement ni la présence de particules de carbone ni de celles d'électrolyte solide. Cette technologie utilise de l'électrolyte liquide qui permet lors de la charge l'évacuation de l'électrolyte à l'intérieur de la porosité pour laisser la place au lithium métal. Néanmoins, cette structure est incompatible avec un électrolyte solide qui ne pourrait pas s'extraire de la porosité et ne pourrait pas non plus revenir à sa position initiale comme peut le faire un électrolyte liquide ce qui bloquerait le processus de décharge.

US2017/0133662 décrit une batterie au lithium comprenant une cathode, un électrolyte et une anode à base de composite de lithium comprenant une matrice composite poreuse et du lithium métal inséré au sein de la matrice. En particulier, une anode composite Li/carbone est décrite (exemple 4) mais ne mentionne pas la présence d'électrolyte solide.

CN109728291 décrit une batterie liquide ou tout solide comprenant une électrode négative de type sans lithium (« lithium-free »), c'est-à-dire une électrode négative ne contenant pas de lithium métal avant sa mise en fonctionnement, comprenant un substrat métallique et une couche de métal lithiophile permettant de favoriser le dépôt uniforme du lithium mais ne mentionne aucunement la porosité et la présence de carbone et/ou d'électrolyte. La géométrie 2D limite également l'efficacité du dépôt de lithium et ne permet pas de lisser les densités de courant.

Les électrodes massives permettent d'obtenir des densités surfaciques de courant élevées mais présentent l'inconvénient de conduire à la formation de dendrites et à un dépôt du lithium inhomogène qui conduit in fine à la limitation de la charge.

Parmi les configurations envisagées pour améliorer les densités d'énergie des cellules électrochimiques, les matériaux électrochimiquement actifs d'électrode négative peuvent contenir un métal capable de former un alliage avec le lithium. Cependant, ces matériaux présentent une forte expansion volumique lors de la lithiation. Cette expansion va être à l'origine de la dégradation de la cellule Li-ion à base de ce matériau à l'électrode négative : i) dégradation de l'intégrité de l'électrode qui conduit à une diminution de l'utilisation de l'électrode, ii) fracture de l'interface électrode-électrolyte (ou SEI pour « Solid Electrolyte Interface ») qui conduit à la formation continue de produit de dégradation, iii) addition de contraintes sur l'ensemble de la batterie et dégradations des autres composants.

Il est donc désirable de mettre à disposition une électrode négative dont la structure et la composition permettent d'augmenter la quantité et la qualité du dépôt de lithium tout en évitant les fortes variations d'épaisseur.

L'invention vise donc notamment à fournir une électrode négative poreuse caractérisée en ce que ladite électrode comprend :

- des particules d'électrolyte solide et
- des particules de carbone.

Ladite électrode convient à l'utilisation dans un dispositif de stockage d'énergie.

Le terme « électrode négative » désigne lorsque l'accumulateur est en décharge, l'électrode fonctionnant en anode et lorsque l'accumulateur est en charge, l'électrode fonctionnant en cathode, l'anode étant définie comme l'électrode où a lieu une réaction électrochimique d'oxydation (émission d'électrons), tandis que la cathode est le siège de la réduction.

Le terme électrode négative désigne l'électrode d'où partent les électrons, et d'où sont libérés les cations (Li+) en décharge

La structure d'électrode selon l'invention permet ainsi le dépôt du lithium de façon homogène au sein de la structure poreuse tout en limitant fortement les variations volumiques de l'électrode.

Selon un mode de réalisation, l'électrode selon l'invention ne contient pas de lithium métal avant sa mise en fonctionnement. Elle peut ainsi être qualifiée d'électrode « Li-free ». Néanmoins, en fonctionnement au sein d'un élément électrochimique en charge, elle comprend en outre du lithium métal ou une phase riche en lithium (concentration supérieure à 80 % atomique) issue de la réaction avec le composé lithiophile au sein de sa porosité.

La couche d'électrode négative consiste généralement en un support conducteur utilisé comme collecteur de courant qui est revêtu de l'électrode négative selon l'invention contenant lesdites particules d'électrolyte solide et lesdites particules de carbone.

Il est entendu que dans les systèmes « lithium free », une électrode négative est également présente (généralement limitée initialement au seul collecteur de courant).

On entend par collecteur de courant un élément tel que plot, plaque, feuille ou autre, en matériau conducteur, relié à l'électrode positive ou négative, et assurant la conduction du flux d'électrons entre l'électrode et les bornes de la batterie.

Le collecteur de courant est de préférence un support conducteur bidimensionnel tel qu'un feuillard plein ou perforé, à base de métal, par exemple en cuivre, en nickel, en acier, en acier inoxydable ou en aluminium. Ledit collecteur à l'électrode négative se présente généralement sous forme de feuillard de cuivre.

Selon un mode de réalisation, ladite électrode peut contenir en outre un liant.

On entend par « liant », les matériaux permettant de conférer à l'électrode la cohésion des différents composants et sa tenue mécanique sur le collecteur de courant, et/ou de conférer une certaine flexibilité à l'électrode pour sa mise en œuvre en cellule. On peut ainsi citer à titre de liants : polyfluorure de vinylidène (PVDF) et ses copolymères, polytétrafluoroéthylène (PTFE) et ses copolymères, polyacrylonitrile (PAN), poly(méthyl)- ou (butyl)méthacrylate, polychlorure de vinyle (PVC), poly(vinyl formai), polyester, polyéthéramides séquencés, polymères d'acide acrylique, acide méthacrylique, acrylamide, acide itaconique, acide sulfonique, élastomère et les composés cellulosiques. Le ou les élastomères pouvant être utilisés comme liant peuvent être choisis parmi le styrène-butadiène (SBR), le butadiène-acrylonitrile (NBR), le butadiène-acrylonitrile hydrogéné (HNBR), et un mélange de plusieurs de ceux-ci.

Selon l'invention, l'électrode négative est poreuse :

La porosité correspond à la structure du matériau présentant un réseau organisé de canaux de taille de pores très petite variable : typiquement, on entend ici par « poreux » selon l'invention une taille de pores D50, notamment D90 inférieure à 1 $\mu$m, préférentiellement inférieure à 300 nm. Cette taille de pores confère à l'électrode une surface active par unité de surface d'électrode particulièrement grande.

Selon un mode de réalisation, la porosité de l'électrode est comprise entre 30 et 80%, préférentiellement entre 45 et 60%. Cette porosité permet notamment d'une part d'accueillir le lithium métal (ou la phase riche en Li) dans la porosité et d'autre part de maintenir une tenue mécanique de l'électrode.

Selon un mode de réalisation, la porosité de l'électrode est telle que :

$$\varepsilon = a^* \, 485 \times C/e$$

où C est la capacité surfacique de première charge l'électrode positive (en mAh/cm$^2$) ;

e est l'épaisseur de l'électrode négative à l'état déchargé exprimée en $\mu$m ; 485 est un coefficient ; et

$\varepsilon$ est la porosité de l'électrode négative à l'état déchargé (la porosité étant définie comme le ratio de la différence entre le volume total de l'électrode (hors collecteur de courant) et le volume de matériau divisé par le volume de l'électrode) exprimée en %

et a est un nombre compris 0.8 à 3.

La porosité peut être classiquement mesurée ou calculée. Typiquement, elle peut être mesurée par porosimétrie par intrusion d'hélium ou de mercure. Elle peut être réalisée au moyen d'un porosimètre et permet de mesurer notamment la distribution des volumes de pores par l'intermédiaire du diamètre d'entrée de ces pores. Elle permet d'avoir accès à la distribution de taille des pores.

La porosité peut également être calculée à partir de l'épaisseur, la masse de l'électrode traitée et la composition de l'électrode et la densité des composants.

Selon un mode de réalisation, ladite électrode présente une résistance électronique inférieure à 100 Ohm.cm$^2$, typiquement inférieure à 50 Ohm.cm$^2$.

Selon un mode de réalisation ladite électrode peut contenir outre les particules de carbone et d'électrolyte solide, des particules d'élément lithiophile, préférentiellement de taille inférieure à 200 nm dont la quantité exprimée en g/cm$^2$ est préférentiellement égale à k\*C$_{positive}$.

avec k compris entre $0.1.10^{-5}$ à $2.10^{-5}$ g/mAh,

et $C_{positive}$ représente la capacité totale de l'électrode positive en mAh/cm$^2$.

Selon un mode de réalisation, ladite électrode est recouverte d'une couche de métal lithiophile.

Selon un mode de réalisation alternatif, les particules d'électrolyte solide sont enrobées d'une couche de métal lithiophile.

L'expression « lithiophile » définit un matériau présentant une affinité pour le lithium, (ie) sa capacité à former des alliages avec le lithium.

Selon un mode de réalisation, l'élément lithiophile est choisi parmi l'argent, le zinc, le silicium et le magnésium, plus particulièrement l'argent, le zinc et le magnésium. Typiquement, les alliages formés par ces éléments avec le lithium incluent les alliages de type $Li_xZn_y$, $Li_xMg_y$ et $Li_xAg_y$, avec des ratio atomiques x/y variables.

La couche de métal lithiophile mentionnée ici enrobant les particules d'électrolyte solide ou l'électrode a typiquement une épaisseur qui peut varier de quelques nanomètres à moins de 100nm, typiquement environ inférieure à 50nm, notamment inférieure à 20 nm, notamment inférieure à 10 nm, plus préférentiellement de 2 à 5 nm.

Cette couche est conductrice du lithium, en ce qu'elle permet le transit du lithium depuis la couche d'électrolyte vers la première couche. Elle peut également permettre une homogénéisation du dépôt de lithium en permettant la formation de piles locales : en effet au cours de la charge, une différence de potentiels est créée dans l'épaisseur de l'électrode ; cette différence de potentiels peut alors permettre un rééquilibrage électrochimique sur l'épaisseur de l'électrode par oxydation du lithium dans les zones de potentiels les plus positives et une réduction de Li+ dans les zones de potentiels les plus négatifs.

Selon un mode de réalisation, la couche d'enrobage est constituée exclusivement du matériau lithiophile.

Les particules ou l'électrode peuvent être enrobées sur toute ou partie de leur surface périphérique. Selon un mode de réalisation, elles sont enrobées sur l'ensemble de leur surface périphérique. La couche de revêtement recouvre au moins 50% de la surface spécifique de l'électrode, de préférence au moins 75%, plus préférentiellement au moins 90%, encore plus préférentiellement au moins 95%.

Les particules de carbone ne sont pas limitées quant à leur morphologie. On peut ainsi citer les particules sphériques, les agrégats de particules ou les fibres ou nanofibres. Notamment, les particules peuvent être choisies parmi les particules de poudre de carbone, telle que des particules de noir de carbone (par exemple de type C65), les fibres de carbone par exemple de type VGCF, ou des nanoparticules de carbone, telles que des nanotubes de carbone (CNT).

Les particules de carbone sont notamment choisies parmi les nanoparticules de carbone.

On entend par nanoparticule un nano-objet dont au moins l'une des trois dimensions est à l'échelle nanométrique, ou des particules dont le diamètre nominal (ou équivalent) est inférieur à 100 nm environ (Institut national de recherche et de sécurité (INRS), Les nanomatériaux, Paris, juin 2008).

Typiquement, la teneur en carbone (poids) des électrodes négatives est comprise entre 2 et 30%.

Selon un mode de réalisation, les particules de carbone sont de type non polymérique ; elles peuvent être sous forme de nanotubes de carbone (CNT), et notamment formant des agglomérats poreux de CNT (ou pelote de CNT).

Selon un mode de réalisation, l'électrolyte solide peut être de type sulfure.

A titre d'électrolyte sulfure, on peut notamment citer toutes les compositions et matériaux pouvant être synthétisés à partir d'au moins un des précurseurs $Li_2S$ et $P_2S_5$ auquel peuvent être ajoutés d'autres précurseurs comme Lil, LiCl, LiBr, $Li_2O$, $SiS_2$, $GeS_2$, $SnS_2$, ZnS, $Li_3PO_4$, ....

Parmi ces phases, on peut notamment citer :

- $Li_3PS_4$
- l'ensemble des phases $[(Li_2S)_y(P_2S_5)_{1-y}]_{(1-z)}(LiX)_z$ (avec X un élément halogène ; $0<y<1$ ; $0 \leq z \leq 1$)
- les argyrodites telles que $Li_6PS_5X$, avec X=Cl, Br, I, ou $Li_7P_3S_{11}$,
- les thio-phosphates de type $Li_{10}GeP_2S_{12}$ et ses dérivés....

L'électrolyte sulfure peut-être complètement ou partiellement cristallisé, ou bien amorphe.

Typiquement, la teneur en électrolyte (poids) des électrodes négatives est comprise entre 20 et 90%.

Selon un mode de réalisation, le diamètre des particules d'électrolyte solide est compris entre 0.1 et 5 $\mu$m.

Selon un autre objet, la présente invention concerne également un procédé de fabrication d'une électrode selon l'invention, ledit procédé comprenant :

- Le mélange des particules de carbone, des particules d'électrolyte solide éventuellement enrobées, et d'un agent porophore ;
- La création de la porosité ;
- Et éventuellement le dépôt de ladite couche lithiophile.

L'électrode ainsi constituée est ensuite déposée sur un collecteur de courant, de façon à former la couche d'électrode négative. Ce dépôt peut être réalisé par exemple par enduction.

A titre d'agent porophore, on peut notamment citer le carbonate de polypropylène. Typiquement, la teneur de l'agent porophore dans le mélange est comprise entre 10 et 50% en poids.

La création de la porosité peut ensuite effectuée, par application ou adaptation de méthodes connues, dépendant généralement de la nature de l'agent porophore utilisé. Typiquement, cela peut être réalisé par traitement thermique, à température généralement supérieure à 150°C.

L'enrobage des particules d'électrolyte solide ou de l'électrode par le métal lithiophile peut être effectué par toute méthode permettant le dépôt de couche mince, telle que :

- le dépôt chimique : sol-gel, enduction centrifuge ou spin-coating, dépôt en phase vapeur, dépôt de couche atomique ou atomic layer deposition ALD, dépôt de couche moléculaire ou molecular layer deposition MLD, ou par oxydation ménagée ; et
- le dépôt physique en phase vapeur (PVD) : évaporation sous vide, pulvérisation cathodique, dépôt laser pulsé, dépôt électrohydrodynamique.

Typiquement, la couche peut être déposée par ALD ou PVD.

L'ALD consiste à exposer la surface des particules de carbone successivement à différents précurseurs chimiques afin d'obtenir des couches ultra-minces.

Le dépôt peut être généralement effectué par ALD, PVD. Typiquement, le traitement par PVD est effectué sur lit fluidisé pour permettre un dépôt homogène, (ie) un traitement des particules dans toutes les directions.

Selon un autre objet, la présente invention concerne encore un élément électrochimique tout solide comprenant une électrode négative poreuse selon l'invention.

On entend par « élément électrochimique » une cellule électrochimique élémentaire constituée de l'assemblage électrode positive/électrolyte/électrode négative, permettant d'emmagasiner l'énergie électrique fournie par une réaction chimique et de la restituer sous forme de courant.

Typiquement un tel élément électrochimique comprend une couche d'électrode négative, une couche d'électrode positive et une couche de séparation électrolytique, tel que des particules d'électrolyte solide sont présentes au sein des trois couches.

Selon un mode de réalisation, l'élément électrochimique comprend une couche intermédiaire comprise entre l'électrode négative et la couche d'électrolyte solide utilisée comme séparateur ; Typiquement, cette couche contient majoritairement de la poudre fine de carbone amorphe ainsi qu'un composé lithiophile formant des alliages avec le lithium.

Dans le cadre de la présente invention, l'électrode positive de la couche d'électrode positive peut être de tout type connu.

Le terme électrode positive désigne l'électrode où entrent les électrons, et où arrivent les cations (Li+) en décharge.

La couche d'électrode positive consiste généralement en un support conducteur utilisé comme collecteur de courant qui est revêtu de l'électrode positive contenant le matériau actif d'électrode positive, des particules d'électrolyte solide et un additif carboné.

Cet additif carboné est réparti dans l'électrode de manière à former un réseau percolant électronique entre l'ensemble des particules de matériau actif et le collecteur de courant.

Typiquement l'électrode positive peut également comprendre un liant, tels que ceux précédemment cités pour l'électrode négative.

Le matériau actif d'électrode positive n'est pas particulièrement limité. Il peut être choisi dans les groupes suivants ou leurs mélanges :

- un composé (**a**) de formule $Li_xM_{1-y-z-w}M'_yM''_zM'''_wO_2$ (LMO2) où M, M', M" et M''' sont choisis dans le groupe consistant en B, Mg, Al, Si, Ca, Ti, V, Cr, Mn, Fe, Co, Ni, Cu, Zn, Y, Zr, Nb, W et Mo à la condition qu'au moins M ou M' ou M" ou M''' soit choisi parmi Mn, Co, Ni, ou Fe ; M, M', M" et M''' étant différents les uns des autres; et $0,8 \leq x \leq 1,4$ ; $0 \leq y \leq 0,5$ ; $0 \leq z \leq 0,5$ ; $0 \leq w \leq 0,2$ et $x+y+z+w<2,1$ ;
- un composé (**b**) de formule $Li_xMn_{2-y-z}M'_yM''_zO_4$ (LMO), où M' et M" sont choisis dans le groupe consistant en B, Mg, Al, Si, Ca, Ti, V, Cr, Fe, Co, Ni, Cu, Zn, Y, Zr, Nb et Mo ;. M' et M" étant différents l'un de l'autre, et $1 \leq x \leq 1,4$ ; $0 \leq y \leq 0,6$ ; $0 \leq z \leq 0,2$ ;
- un composé (**c**) de formule $Li_xFe_{1-y}M_yPO_4$ (LFMP) où M est choisi dans le groupe consistant en B, Mg, Al, Si, Ca, Ti, V, Cr, Mn, Co, Ni, Cu, Zn, Y, Zr, Nb et Mo; et $0,8 \leq x \leq 1,2$ ; $0 \leq y \leq 0,6$ ;
- un composé (**d**) de formule $Li_xMn_{1-y-z}M'_yM''_zPO_4$ (LMP), où M' et M" sont différents l'un de l'autre et sont choisis dans le groupe consistant en B, Mg, Al, Si, Ca, Ti, V, Cr, Fe, Co, Ni, Cu, Zn, Y, Zr, Nb et Mo, avec $0,8 \leq x \leq 1,2$ ; $0 \leq y \leq 0,6$ ; $0,0 \leq z \leq 0,2$ ;

- un composé (**e**) de formule $xLi_2MnO_3; (1-x)LiMO_2$ où M est au moins un élément choisi parmi Ni, Co et Mn et $x \leq 1$.
- un composé (**f**) de formule $Li_{1+x}MO_{2-y}F_y$ de structure cubique où M représente au moins un élément choisi dans le groupe constitué de Na, K, Mg, Ca, B, Sc, Ti, V, Cr, Mn, Fe, Co, Ni, Cu, Zn, Al, Y, Zr, Nb, Mo, Ru, Ag, Sn, Sb, Ta, W, Bi, La, Pr, Eu, Nd et Sm et où $0 \leq x \leq 0,5$ et $0 \leq y \leq 1$ ;
- le Graphite
- le Silicium
- un oxyde de titane et de niobium TNO ayant pour formule (**g**) :

$$Li_xTi_{a-y}M_yNb_{b-z}M'_zO_{((x+4a+5b)/2)-c-d}X_c$$

où $0 \leq x \leq 5$ ; $0 \leq y \leq 1$ ; $0 \leq z \leq 2$ ; $1 \leq a \leq 5$ ; $1 \leq b \leq 25$ ; $0,25 \leq a/b \leq 2$ ; $0 \leq c \leq 2$ et $0 \leq d \leq 2$ ; $a-y > 0$ ; $b-z > 0$ ;
M et M' représentent chacun au moins un élément choisi dans le groupe constitué de Li, Na, K, Mg, Ca, B, Sc, Ti, V, Cr, Mn, Fe, Co, Ni, Cu, Zn, Al, Y, Zr, Nb, Mo, Ru, Ag, Sn, Sb, Ta, W, Bi, La, Pr, Eu, Nd et Sm ;
X représente au moins un élément choisi dans le groupe constitué de S, F, Cl et Br.
L'indice d représente une lacune en oxygène. L'indice d peut être inférieur ou égal à 0,5.
Ledit au moins un oxyde de titane et de niobium peut être choisi parmi $TiNb_2O_7$, $Ti_2Nb_2O_9$ et $Ti_2Nb_{10}O_{29}$.

- un oxyde de titane lithié ou un oxyde de titane capable d'être lithié. LTO est choisi parmi les oxydes suivants :

**h**) $Li_{x-a}M_aTi_{y-b}M'_bO_{4-c-d}X_c$ dans lequel $0<x\leq3$ ; $1\leq y\leq2,5$ ; $0\leq a\leq1$ ; $0\leq b\leq1$ ; $0\leq c\leq2$ et $-2,5\leq d\leq2,5$ ;

M représente au moins un élément choisi dans le groupe constitué de Na, K, Mg, Ca, B, Mn, Fe, Co, Cr, Ni, Al, Cu, Ag, Pr, Y et La ;
M' représente au moins un élément choisi dans le groupe constitué de B, Mo, Mn, Ce, Sn, Zr, Si, W, V, Ta, Sb, Nb, Ru, Ag, Fe, Co, Ni, Zn, Al, Cr, La, Pr, Bi, Sc, Eu, Sm, Gd, Ti, Ce, Y et Eu ;
X représente au moins un élément choisi dans le groupe constitué de S, F, Cl et Br ;
L'indice d représente une lacune en oxygène. L'indice d peut être inférieur ou égal à 0,5.

**i**) $H_xTi_yO_4$ dans lequel $0\leq x\leq1$ ; $0\leq y\leq2$, et
**j**) un mélange des composés h) à i).

Des exemples d'oxydes lithiés de titane appartenant au groupe h) sont la spinelle $Li_4Ti_5O_{12}$, $Li_2TiO_3$, la ramsdellite $Li_2Ti_3O_7$, $LiTi_2O_4$, $Li_xTi_2O_4$, avec $0<x\leq2$ et $Li_2Na_2Ti_6O_{14}$.
Un composé LTO préféré a pour formule $Li_{4-a}M_aTi_{5-b}M'_bO_4$, par exemple $Li_4Ti_5O_{12}$ qui s'écrit encore $Li_{4/3}Ti_{5/3}O_4$.

Le matériau conducteur électronique d'électrode positive est généralement choisi parmi le graphite, le noir de carbone, le noir d'acétylène, la suie, le graphène, les nanotubes de carbones ou un mélange de ceux-ci.

Le collecteur de courant de la couche d'électrode positive est typiquement constitué d'aluminium.

La couche électrolytique (ou séparateur) contient une composition électrolytique, pouvant comprendre un ou plusieurs constituants électrolytiques. A titre de constituants d'électrolyte solide, on peut notamment citer les composés soufrés seuls ou en mélange avec d'autres constituants, tels que des polymères ou gels. On peut ainsi citer les sulfures partiellement ou complètement cristallisés ainsi que les amorphes. Des exemples de ces matériaux peuvent être sélectionnés parmi les sulfures de composition A $Li_2S$ - B $P_2S_5$ (avec $0<A<1,0<B<1$ et $A+B = 1$) et leurs dérivés (par exemple avec dopage Lil, LiBr, LiCl, ...) ; les sulfures de structure argyrodite ; ou type LGPS ($Li_{10}GeP_2S_{12}$), et ses dérivés. Les matériaux électrolytiques pourront également comprendre des oxysulfures, des oxydes (grenat, phosphate, anti-perovskite, ...), des hydrures, des polymères, des gels ou des liquides ioniques conducteurs des ions lithium.

Des exemples de compositions électrolytiques sulfures sont décrits notamment dans Park, K. H., Bai, Q., Kim, D. H., Oh, D. Y., Zhu, Y., Mo, Y., & Jung, Y. S. (2018). Design Strategies, Practical Considerations, and New Solution Processes of Sulfide Solid Electrolytes for All-Solid-State Batteries. Advanced Energy Materials, 1800035.

Dans les éléments de type tout solide, les composés électrolytiques peuvent être inclus dans la couche électrolytique, mais peuvent également être compris en partie au sein des électrodes.

Les particules d'électrolyte solide présentes dans l'électrode négative et/ou l'électrode positive et/ou la couche de séparateur peuvent être identiques ou différentes.

Typiquement, l'élément électrochimique selon l'invention est une batterie de type « lithium free ».

Il est entendu que le terme « lithium free » définit le fait que la batterie ne contient pas de lithium métal lors du montage de l'accumulateur, mais que du lithium est déposé sous forme métallique ou d'une phase riche en lithium puis consommé de manière contrôlée et réversible in situ au cours du fonctionnement de la batterie. Typiquement, le lithium est déposé au sein de l'électrode négative au cours de la charge et consommé au cours de la décharge.

Selon un autre objet, la présente invention concerne également un module électrochimique comprenant l'empilement d'au moins deux éléments selon l'invention, chaque élément étant connecté électriquement avec un ou plusieurs autre(s) élément(s).

Le terme « module » désigne donc ici l'assemblage de plusieurs éléments électrochimiques, lesdits assemblages pouvant être en série et/ou parallèle.

Un autre objet de l'invention est encore une batterie comprenant un ou plusieurs modules selon l'invention.

On entend par « batterie » ou accumulateur, l'assemblage de plusieurs modules selon l'invention.

Selon un mode de réalisation, les batteries selon l'invention sont des accumulateurs dont la capacité est supérieure à 100 mAh, typiquement 1 à 100Ah.

**Figures**

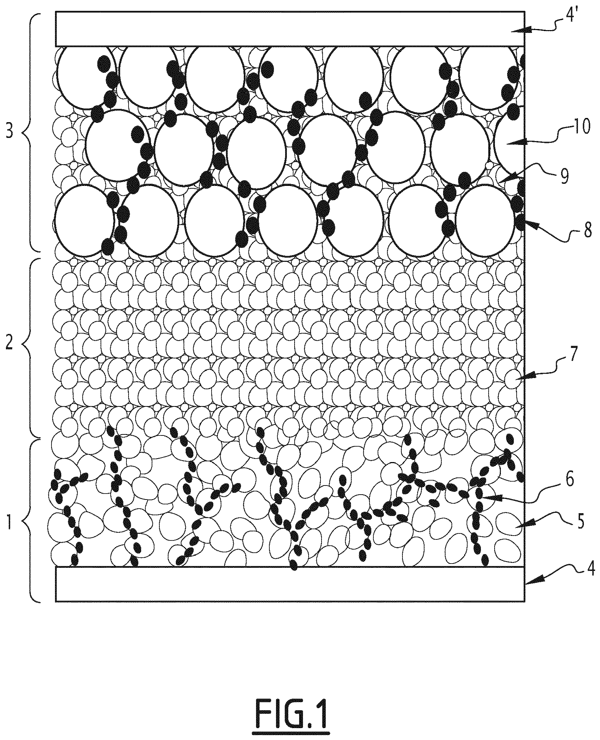

La Figure 1 représente une représentation schématique de la structure d'un élément électrochimique selon l'invention. Ledit élément comprend une couche d'électrode négative (1), une couche d'électrode positive (3), séparées par une couche électrolytique (2).

La couche d'électrode négative (1) comprend un collecteur de courant (4) sur lequel est déposé le matériau d'électrode négative selon l'invention, constituée de particules d'électrolyte solide (5) et de particules de carbone (6).

Il est entendu que selon des modes de réalisation non représentés ici, les particules (5) ou l'électrode constituée des particules (5) et (6) peuvent être recouvertes d'un métal lithiophile.

La couche de séparation (2) est constituée de particules d'électrolyte solide (7).

Ces particules (7) peuvent être identiques aux particules (5).

La couche d'électrode positive (3) comprend un collecteur de courant (4') sur lequel est déposé un mélange comprenant des particules d'électrolyte solide (9), du carbone conducteur (8), et des particules de matériau actif (10).

Il est entendu que les couches (1) et (3) peuvent comprendre, en outre des liants, qui ne sont pas représentés à la Figure 1.

**Exemple:**

1- Préparation des électrodes négatives :

Les électrolytes utilisés pour illustrer l'invention sont des composés de types sulfures de composition $Li_3PS_4$, $(Li_3PS_4)_{0.8}(LiI)_{0.2}$ et $Li_6PS_5Cl$. Les additifs conducteurs ont été choisis parmi des noirs de carbone (de type C65), des fibres de type VGCF ainsi que des nanotubes de carbone. Alors que les nanotubes de carbone sont habituellement utilisés sous forme dispersée dans un solvant, la particularité des nanotubes utilisés dans les exemples est qu'ils se présentent sous forme de pelotes non désagglomérées. L'électrolyte solide et le carbone sont mélangés avec un liant (PTFE), un matériau lithiophile tel que Zn, Ag, Mg et Si et un agent porophore (carbonate de polypropylène). Le mélange des poudres est réalisé manuellement en boite à gant dans un mortier en agate en mixant avec un pilon 500 mg de mélange pendant 10min. Une quantité de ce mélange est placée dans un moule à pastiller dont la matrice a un diamètre intérieur de 1 cm de diamètre; la masse du mélange est égale au grammage de l'électrode multipliée par la surface intérieure de la matrice. L'ensemble est comprimé à une pression comprise entre 1 et $5t/cm^2$.

Le matériau lithiophile peut être utilisé sous plusieurs formes : soit sous forme de poudre fine (particules de taille comprise entre 30nm et 200nm), soit le matériau a été déposé sur la poudre d'électrolyte ou sur la poudre de carbone par PVD. Le procédé utilisé est la pulvérisation cathodique avec une enceinte tournante permettant un mouvement des particules et ainsi obtenir un dépôt plus homogène sur la surface des particules.

2- Réalisation de l'accumulateur :

L'électrode positive utilisée dans les exemples est constituée d'un matériau actif NMC (composition : $Li(Ni_{0.33}Mn_{0.33}Co_{0.33})O_2$), d'électrolyte sulfure de composition $(Li_3PS_4)_{0.8}(LiI)_{0.2}$ et de PTFE. Les proportions respectives sont de 74.5%, 25% et 0.5% (poids). Les constituants sont mélangés pendant 5 min dans un mortier en agate en boite à gant.

La masse de mélange en mg pour la réalisation de l'électrode est égale à la capacité surfacique souhaitée en $mAh/cm^2$ multipliée par la surface de l'électrode et divisée par 150 mAh/g.

Dans le moule à pastiller contenant la pastille d'électrode négative, 50mg d'électrolyte $(Li_3PS_4)_{0.8}(LiI)_{0.2}$ sont ajoutés pour réaliser la couche électrolytique permettant d'assurer l'isolation électronique entre les 2 électrodes.

L'ensemble est ensuite comprimé à 5t/cm$^2$. La masse de mélange d'électrode positive est ensuite ajoutée sur la surface de la couche d'électrolyte, puis une nouvelle compression de l'ensemble est réalisée à 5t/cm$^2$. La pastille ainsi obtenue est alors traitée thermiquement à 260°C sous argon pendant 15min pour retirer l'agent porophore.

L'assemblage est ensuite placé dans une cellule électrochimique étanche permettant la connexion électrique avec les électrodes positive et négative, tout en maintenant une pression mécanique d'environ 50 bar. La cellule est ensuite chargée à C/20 jusqu'à une tension de 4.3V. La capacité totale de l'électrode positive considérée dans le tableau 1 correspond à la capacité chargée de 1$^{ère}$ charge divisée par la surface de l'électrode.

En raison d'une irréversibilité partielle de la capacité de l'électrode positive, la capacité totale ne peut pas être mesurée lors des cycles suivants.

Une manière de mesurer la capacité totale après le 1$^{er}$ cycle consiste à charger l'accumulateur à la tension maximale nominale de l'accumulateur (dans notre exemple 4.3V) à un régime lent (typiquement C/20), puis à démonter l'accumulateur en boite à gant, récupérer un échantillon de surface connu (si l'électrode est à double face, la surface considérée est à multiplier par 2). Toujours en boite à gants, l'échantillon d'électrode est placé dans une cellule étanche de volume connu équipée de capteurs de pression et de température ainsi que d'un septum. A l'aide d'une seringue remplie d'eau alkaline à pH14, on introduit de l'eau dans la cellule sur l'électrode (l'électrode doit être totalement imprégnée). Le lithium à l'état métallique dans l'électrode va ainsi réagir avec l'eau pour former de l'hydrogène. Une fois la pression de la cellule stabilisée, on peut calculer le nombre de mole d'hydrogène formé ($n_{H2}$) à partir de la pression, la température et le volume de la cellule. La capacité surfacique totale de l'électrode positive en mAh/cm$^2$ est égale à $n_{H2}$*53600/S, S étant la surface d'électrode négative préalablement considérée exprimée en cm$^2$.

La porosité de l'électrode négative est estimée de la façon suivante : une électrode négative est préparée dans les conditions décrites dans le paragraphe 1. Puis un traitement thermique est appliqué à 260°C pendant 15min sous argon. La porosité est ensuite classiquement calculée à partir de l'épaisseur, la masse de l'électrode traitée et la composition de l'électrode et la densité des composants.

La conductivité électronique de l'électrode est vérifiée en plaçant l'électrode négative traitée entre 2 disques de cuivre de 1cm de diamètre sous une pression de 50 bar. Un courant de 1mA est appliqué et on vérifie que la tension aux bornes des électrodes de cuivre est inférieure à 0.13V (ce qui correspond à une résistance < 100 Ohm.cm$^2$).

Pour la mesure du gonflement de l'électrode négative : la cellule électrochimique est démontée et l'assemblage est placé dans un microscope électronique à balayage avec lequel il est possible de mesurer l'épaisseur de l'électrode négative.

Les exemples de l'invention et les résultats obtenus sont rassemblés dans les tableaux 1, 2 et 3. Les exemples comparatifs des tableaux 4-6 ont été préparés avec la même procédure que celle utilisée pour les exemples de l'invention.

Tableau 1

| N° Exemple | composition molaire de l'électrolyte | % masse électrolyte avant traitement thermique | diamètre particules électrolyte D50* ($\mu$m) | type de carbone | % masse de carbone avant traitement thermique | % liant avant traitement thermique (poid s) | % de porophore avant traitement thermique (poids) | composé lithiophile |
|---|---|---|---|---|---|---|---|---|
| Ex1 | $Li_3PS_4$ | 50 | 2 | pelote CNT | 10 | 10 | 29,5 | Ag |
| Ex2 | $(Li_3PS_4)_{0.8}(LiI)_{0.2}$ | 50 | 1 | C65 | 10 | 10 | 29,5 | Ag |
| Ex3 | $Li_6PS_5Cl$ | 50 | 0,1 | pelote CNT | 10 | 10 | 29,5 | Ag |
| Ex4 | $Li_6PS_5Cl$ | 50 | 5 | VGCF | 10 | 10 | 29,5 | Ag |
| Ex5 | $Li_6PS_5Cl$ | 50 | 5 | VGCF | 10 | 10 | 29,5 | Ag |
| Ex6 | $Li_6PS_5Cl$ | 50 | 5 | VGCF | 10 | 10 | 29,5 | Ag |
| Ex7 | $Li_6PS_5Cl$ | 50 | 5 | VGCF | 10 | 5 | 34,5 | Ag |
| Ex8 | $Li_6PS_5Cl$ | 50 | 5 | VGCF | 10 | 10 | 29,5 | Ag |
| Ex9 | $Li_6PS_5Cl$ | 50 | 5 | VGCF | 10 | 15 | 24,5 | Ag |
| Ex10 | $Li_6PS_5Cl$ | 40 | 5 | VGCF | 10 | 20 | 29,5 | Ag |
| Ex5 | $Li_6PS_5Cl$ | 50 | 5 | VGCF | 10 | 10 | 29,5 | Ag |
| Ex6 | $Li_6PS_5Cl$ | 50 | 2 | pelote CNT | 2 | 5 | 42,5 | Ag |
| Ex7 | $Li_6PS_5Cl$ | 50 | 1 | pelote CNT | 5 | 10 | 34,5 | Mg |
| Ex8 | $Li_6PS_5Cl$ | 50 | 1 | C65 | 10 | 10 | 29,5 | Mg |
| Ex9 | $Li_6PS_5Cl$ | 40 | 1 | C65 | 20 | 10 | 29,5 | Zn |
| Ex10 | $Li_6PS_5Cl$ | 50 | 1 | C65 | 10 | 5 | 34,5 | Zn |
| Ex11 | $Li_6PS_5Cl$ | 20 | 1 | C65 | 5 | 10 | 64,5 | Si |
| Ex12 | $Li_6PS_5Cl$ | 30 | 1 | C65 | 10 | 10 | 49,5 | Si |
| Ex13 | $Li_6PS_5Cl$ | 40 | 1 | C65 | 10 | 10 | 39,8 | Si |
| Ex14 | $Li_6PS_5Cl$ | 60 | 1 | C65 | 10 | 10 | 19 | Si |

| N° Exemple | composition molaire de l'électrolyte | % masse électrolyte avant traitement thermique | diamètre particules électrolyte D50* ($\mu$m) | type de carbone | % masse de carbone avant traitement thermique | % liant avant traitement thermique (poid s) | % de porophore avant traitement thermique (poids) | composé lithiophile |
|---|---|---|---|---|---|---|---|---|
| Ex15 | Li$_6$PS$_5$Cl | 40 | 1 | pelote CNT | 10 | 5 | 42 | Si |
| Ex16 | Li$_6$PS$_5$Cl | 50 | 1 | pelote CNT | 10 | 5 | 34,7 | Si |
| Ex17 | Li$_6$PS$_5$Cl | 50 | 1 | pelote CNT | 10 | 5 | 34,5 | Mg |
| Ex18 | Li$_6$PS$_5$Cl | 50 | 1 | pelote CNT | 10 | 5 | 34,5 | Mg |
| Ex19 | Li$_6$PS$_5$Cl | 50 | 1 | pelote CNT | 10 | 10 | 29,5 | Mg |
| * D50 mesuré au granulomètre laser | | | | | | | | |

Tableau 2

| N° Exemple | composé lithiophile (poudre ou coating sur Electrolyte Solide ou carbone) | %masse composé lithiophile dans l'électrode avant TT | k (g/mAh) | porosité électrode négative après TT (%) | Epaisseur (μm) | grammage total avt TT (mg/cm²) | capacité totale de l'électrode positive (mAh/cm²) | a | résistance électronique de l'électrode /-/ (Ohm.cm²) |
|---|---|---|---|---|---|---|---|---|---|
| Ex1 | poudre | 0,5 | 6E-6 | 50 | 43 | 6 | 5 | 0,87 | <100 |
| Ex2 | poudre | 0,5 | 8E-6 | 47 | 54 | 8 | 5 | 1,03 | <100 |
| Ex3 | poudre | 0,5 | 8E-6 | 47 | 54 | 8 | 5 | 1,03 | <100 |
| Ex4 | poudre | 0,5 | 8E-6 | 47 | 54 | 8 | 5 | 1,03 | <100 |
| Ex5 | poudre | 0,5 | 8E-6 | 47 | 54 | 8 | 5 | 1,03 | <100 |
| Ex6 | poudre | 0,5 | 8E-6 | 47 | 54 | 8 | 5 | 1,03 | <100 |
| Ex7 | poudre | 0,5 | 8E-6 | 51 | 55 | 8 | 5 | 1,18 | <100 |
| Ex8 | poudre | 0,5 | 8E-6 | 47 | 54 | 8 | 5 | 1,03 | <100 |
| Ex9 | poudre | 0,5 | 8E-6 | 41 | 52 | 8 | 5 | 0,89 | <100 |
| Ex10 | poudre | 0,5 | 7.5E-6 | 44 | 47 | 7,5 | 5 | 0,86 | <100 |
| Ex5 | coating sur poudre ES | 0,5 | 8E-6 | 47 | 54 | 8 | 5 | 1,03 | <100 |
| Ex6 | coating sur poudre de carbone | 0,5 | 7.5E-6 | 59 | 22 | 3 | 2 | 1,32 | <100 |
| Ex7 | poudre | 0,5 | 6.67E-6 | 51 | 28 | 4 | 3 | 0,98 | <100 |
| Ex8 | poudre | 0,5 | 7.5E-6 | 46 | 40 | 6 | 4 | 0,97 | <100 |
| Ex9 | poudre | 0,5 | 7.5E-6 | 47 | 50 | 7,5 | 5 | 0,97 | <100 |
| Ex10 | poudre | 0,5 | 6E-6 | 51 | 83 | 12 | 10 | 0,88 | <100 |
| Ex11 | poudre | 0,5 | 5E-6 | 78 | 159 | 20 | 20 | 1,27 | <100 |
| Ex12 | poudre | 0,5 | 6.67E-6 | 66 | 50 | 6,67 | 5 | 1,34 | <100 |
| Ex13 | poudre | 0,2 | 3.33E-6 | 57 | 35 | 5 | 3 | 1,38 | <100 |
| Ex14 | poudre | 1 | 1.33E-5 | 42 | 48 | 6,67 | 5 | 0,83 | <100 |
| Ex15 | poudre | 3 | 3E-6 | 59 | 36 | 5 | 5 | 0,87 | <100 |
| Ex16 | poudre | 0,3 | 4.8E-6 | 49 | 53 | 8 | 5 | 1,06 | <100 |

(suite)

| N° Exemple | composé lithiophile (poudre ou coating sur Electrolyte Solide ou carbone) | %masse composé lithiophile dans l'électrode avant TT | k (g/mAh) | porosité électrode négative après TT (%) | Epaisseur (µm) | grammage total avt TT (mg/cm²) | capacité totale de l'électrode positive (mAh/cm²) | a | résistance électronique de l'électrode /-/ (Ohm.cm²) |
|---|---|---|---|---|---|---|---|---|---|
| Ex17 | poudre | 0,5 | 8E-6 | 51 | 56 | 8 | 5 | 1,18 | <100 |
| Ex18 | poudre | 0,5 | 6E-6 | 57 | 47 | 6 | 5 | 1,10 | <100 |
| Ex19 | poudre | 0,5 | 6E-6 | 58 | 52 | 6 | 5 | 1,25 | <100 |

Résultats :

Tableau 3

| N° Exemple | épaisseur min de Li à l'extérieur de la porosité (μm)** | gonflement de l'électrode négative (%) | C*485/e | mAh total /cm³ (exprimé par cc d'électrode négative à l'état chargé) |
|---|---|---|---|---|
| Ex1 | 3,05 | 7 | 57 | 1093 |
| Ex2 | 0,00 | 0 | 45 | 930 |
| Ex3 | 0,00 | 0 | 45 | 930 |
| Ex4 | 0,00 | 0 | 45 | 930 |
| Ex5 | 0,00 | 0 | 45 | 930 |
| Ex6 | 0,00 | 0 | 45 | 930 |
| Ex7 | 0,00 | 0 | 44 | 902 |
| Ex8 | 0,00 | 0 | 45 | 930 |
| Ex9 | 2,66 | 5 | 47 | 913 |
| Ex10 | 3,41 | 7 | 51 | 988 |
| Ex5 | 0,00 | 0 | 45 | 930 |
| Ex6 | 0,00 | 0 | 45 | 922 |
| Ex7 | 0,25 | 1 | 52 | 1072 |
| Ex8 | 0,57 | 1 | 48 | 974 |
| Ex9 | 0,75 | 1 | 48 | 981 |
| Ex10 | 5,59 | 7 | 58 | 1126 |
| Ex11 | 0,00 | 0 | 61 | 1257 |
| Ex12 | 0,00 | 0 | 49 | 1010 |
| Ex13 | 0,00 | 0 | 41 | 846 |
| Ex14 | 4,07 | 9 | 51 | 962 |
| Ex15 | 3,10 | 9 | 67 | 1278 |
| Ex16 | 0,00 | 0 | 46 | 948 |
| Ex17 | 0,00 | 0 | 44 | 898 |
| Ex18 | 0,00 | 0 | 52 | 1065 |
| Ex19 | 0,00 | 0 | 47 | 961 |
| ** formé en cours de fonctionnement | | | | |

Le tableau 3 montre que pour les exemples de l'invention, le gonflement des électrodes est faible, voire nul (<10%) et la capacité volumique de l'électrode négative est supérieure à 800mAh/cm³. Ces caractéristiques sont favorables pour l'obtention d'accumulateur de forte capacité volumique et une durée de vie élevée. De plus, la tenue mécanique des électrodes est adaptée pour l'application.

Exemples comparatifs :

Tableau 4

| N° Exemple | composition molaire de l'électrolyte | % masse électrolyte avant TT | diamètre particules électrolyte (µm) | type de carbone | % masse de carbone avant TT | % liant avant TT (poids) | % de porophore avant traitement thermique (poids) | composé lithiophile |
|---|---|---|---|---|---|---|---|---|
| Comp Ex1 | pas d'électrolyte | 0 | 2 | C65 | 84,5 | 5 | 0 | Ag |
| Comp Ex2 | Li3PS4 | 60 | 2 | C65 | 10 | 10 | 19,5 | Mg |
| Comp Ex3 | Li6PS5Cl | 40 | 2 | C65 | 10 | 10 | 39,5 | Ag |
| Comp Ex4 | Li3PS4 | 40 | 2 |  | 0 | 10 | 49,5 | Si |

Tableau 5

| N° Exemple | composé lithiophile (poudre ou coating sur ES ou carbone) | %masse composé lithiophile dans l'électrode avant TT | k (g/mAh) | porosité électrode négative après TT (%) | épaisseur ($\mu$m) | grammage total avt TT (mg/cm$^2$) | capacité totale de l'électrodepositive (mAh/cm$^2$) | a | résistance électronique de l'électrode /-/ (Ohm.cm$^2$) |
|---|---|---|---|---|---|---|---|---|---|
| Comp Ex1 | poudre | 10 | 1,00E-04 | 11 | 26 | 5 | 5 | 0,11 | <50 |
| Comp Ex2 | poudre | 0,5 | 5,00E-06 | 35 | 32 | 5 | 5 | 0,47 | <100 |
| Comp Ex3 | poudre | 0,5 | 7,50E-06 | 86 | 159 | 7,5 | 5 | 5,61 | <100 |
| Comp Ex4 | poudre | 0,5 | 7,50E-06 | 73 | 72 | 7,5 | 5 | 2,16 | >1000 |

Tableau 6

| N° Exemple | épaisseur min de Li à l'extérieur de la poro ($\mu$m) | gonflement de l'électrode négative (%) | C*485/e | mAh total / $cm^3$ (exprimé par cc d'électrode négative à l'état chargé) |
|---|---|---|---|---|
| Comp Ex1 | 21,44 | 84 | 95 | 1065 |
| Comp Ex2 | 12,89 | 40 | 76 | 1116 |
| Comp Ex3 | 0,00 | 0 | 15 | 315 |
| Comp Ex4 | 0,00 | 34 | 34 | 698 |

Pour les exemples comparatifs, l'électrode constituée de carbone seul (exemple comparatif 1) présente un gonflement très élevé (95%). De même pour l'exemple comparatif N°2 pour lequel le paramètre a est de 0.46 (gonflement de 76%). Lorsque la porosité et le nombre a sont trop élevés (exemple comparatif N°3 : porosité =86% et a=5.6), le gonflement est très faible voire nul mais la capacité volumique est faible ($315 mAh/cm^3$).

Dans le cas de l'exemple comparatif 4, l'électrode négative ne contient pas de carbone, ce qui se traduit par une conductivité très mauvaise d'une part et d'un fort gonflement d'autre part en raison d'une mauvaise intercalation du lithium dans la porosité.

**Revendications**

1. Electrode négative poreuse **caractérisée en ce que** ladite électrode comprend :

    - des particules d'électrolyte solide et
    - des particules de carbone.

2. Electrode selon la revendication 1, telle que sa porosité $\varepsilon$ vérifie:

$$\varepsilon = a^{*}C_{positive}^{*}485/e$$

où

$\varepsilon$ est la porosité de l'électrode négative à l'état déchargé (la porosité étant définie comme le ratio de la différence entre le volume total de l'électrode (hors collecteur de courant) et le volume de matériau divisé par le volume de l'électrode) exprimée en %,
$C_{positive}$ représente la capacité de première charge de l'électrode positive en $mAh/cm^2$,
e représente l'épaisseur en microns ($\mu$m) de ladite électrode négative à l'état déchargé et
a représente un nombre compris 0.8 à 3.

3. Electrode selon l'une quelconque des revendications précédentes, telle qu'elle contient outre les particules de carbone et d'électrolyte solide des particules d'élément lithiophile.

4. Electrode selon l'une quelconque des revendications précédentes, telle que ladite électrode est recouverte d'une couche de métal lithiophile.

5. Electrode selon la revendication 1, 2 ou 3 telle que les particules d'électrolyte solide sont enrobées d'une couche de métal lithiophile.

6. Electrode selon la revendication 3, 4 ou 5 telle que ledit métal lithiophile est choisi parmi l'argent, le zinc et le magnésium.

7. Electrode selon l'une quelconque des revendications précédentes, telle que l'électrode présente une porosité comprise entre 30 et 80%, préférentiellement entre 45 et 60%.

8. Electrode selon l'une quelconque des revendications précédentes, telle que l'électrode présente une taille de pores inférieure à 1 $\mu$m, préférentiellement inférieure à 300 nm.

9. Electrode selon l'une quelconque des revendications précédentes, telle que le carbone est constitué, au moins en partie, d'agglomérats poreux de CNT (ou pelote de CNT).

10. Electrode selon l'une quelconque des revendications précédentes telle que l'électrolyte solide est de type sulfure.

11. Electrode selon l'une quelconque des revendications précédentes, telle qu'il s'agit d'une électrode Li-free.

12. Couche d'électrode négative comprenant une électrode selon l'une quelconque des revendications précédentes et un collecteur de courant.

13. Procédé de fabrication d'une électrode selon l'une quelconque des revendications précédentes, tel qu'il comprend :

   - Le mélange des particules de carbone, des particules d'électrolyte solide éventuellement enrobées et d'un agent porophore,
   - Le traitement thermique du mélange obtenu ;
   - Et éventuellement le dépôt de ladite couche lithiophile.

14. Elément électrochimique tout solide comprenant une électrode négative poreuse selon l'une quelconque des revendications 1 à 11.

15. Elément électrochimique tout solide selon la revendication 14 comprenant en outre une couche intermédiaire comprise entre la couche d"électrode négative et la couche d'électrolyte solide, ladite couche intermédiaire comprenant majoritairement de la poudre fine de carbone amorphe ainsi qu'un composé lithiophile.

16. Module électrochimique comprenant l'empilement d'au moins deux éléments selon la revendication 14, chaque élément étant connecté électriquement avec un ou plusieurs autre(s) élément(s).

17. Batterie comprenant un ou plusieurs modules selon la revendication 15.

# FIG.1

**Europäisches Patentamt**

**European Patent Office**

**Office européen des brevets**

## RAPPORT DE RECHERCHE EUROPEENNE

Numéro de la demande

EP 21 18 1821

### DOCUMENTS CONSIDERES COMME PERTINENTS

| Catégorie | Citation du document avec indication, en cas de besoin, des parties pertinentes | Revendication concernée | CLASSEMENT DE LA DEMANDE (IPC) |
|---|---|---|---|
| X | EP 2 744 029 A1 (TOYOTA MOTOR CO LTD [JP]) 18 juin 2014 (2014-06-18) | 1,2,4, 7-14,16, 17 | INV. H01M4/133 H01M4/136 |
| A | * alinéas [0072] - [0083], [0123], [0130] * | 3,5,6,15 | H01M4/1393 H01M4/1397 H01M4/36 |
| | ----- | | H01M4/58 |
| X | EP 3 576 190 A1 (TOYOTA MOTOR CO LTD [JP]) 4 décembre 2019 (2019-12-04) | 1,2,4, 6-14,16, 17 | H01M4/583 H01M10/0562 |
| A | * alinéas [0044], [0069] - [0085], [0149] * | 3,5,15 | H01M4/134 H01M4/38 H01M4/485 |
| X | EP 2 874 209 A1 (TOYOTA MOTOR CO LTD [JP]) 20 mai 2015 (2015-05-20) | 1,10-12, 14,16,17 | H01M4/587 H01M4/62 |
| A | * alinéas [0002] - [0004], [0023] - [0028], [0060] - [0062], [0075] * | 2-9,13, 15 | ADD. H01M4/02 |
| | ----- | | |
| X | JP H08 162097 A (TOSHIBA BATTERY) 21 juin 1996 (1996-06-21) | 1,12,14, 16,17 | |
| A | * alinéas [0009] - [0011], [0021], [0022] * | 2-11,13, 15 | **DOMAINES TECHNIQUES RECHERCHES (IPC)** |
| | ----- | | H01M |

Le présent rapport a été établi pour toutes les revendications

| Lieu de la recherche | Date d'achèvement de la recherche | Examinateur |
|---|---|---|
| Munich | 5 novembre 2021 | Haering, Christian |

CATEGORIE DES DOCUMENTS CITES

X : particulièrement pertinent à lui seul
Y : particulièrement pertinent en combinaison avec un autre document de la même catégorie
A : arrière-plan technologique
O : divulgation non-écrite
P : document intercalaire

T : théorie ou principe à la base de l'invention
E : document de brevet antérieur, mais publié à la date de dépôt ou après cette date
D : cité dans la demande
L : cité pour d'autres raisons
......................................................................
& : membre de la même famille, document correspondant

EPO FORM 1503 03.82 (P04C02)

**ANNEXE AU RAPPORT DE RECHERCHE EUROPEENNE
RELATIF A LA DEMANDE DE BREVET EUROPEEN NO.**

EP 21 18 1821

La présente annexe indique les membres de la famille de brevets relatifs aux documents brevets cités dans le rapport de recherche européenne visé ci-dessus.
Lesdits members sont contenus au fichier informatique de l'Office européen des brevets à la date du
Les renseignements fournis sont donnés à titre indicatif et n'engagent pas la responsabilité de l'Office européen des brevets.

05-11-2021

| Document brevet cité au rapport de recherche | | Date de publication | Membre(s) de la famille de brevet(s) | | Date de publication |
|---|---|---|---|---|---|
| EP 2744029 | A1 | 18-06-2014 | CN | 103733414 A | 16-04-2014 |
| | | | EP | 2744029 A1 | 18-06-2014 |
| | | | JP | 5177315 B2 | 03-04-2013 |
| | | | JP | 2013055036 A | 21-03-2013 |
| | | | US | 2014154584 A1 | 05-06-2014 |
| | | | WO | 2013021843 A1 | 14-02-2013 |
| EP 3576190 | A1 | 04-12-2019 | EP | 3576190 A1 | 04-12-2019 |
| | | | JP | 2019207793 A | 05-12-2019 |
| | | | KR | 20190135928 A | 09-12-2019 |
| | | | US | 2019372102 A1 | 05-12-2019 |
| | | | US | 2021091376 A1 | 25-03-2021 |
| EP 2874209 | A1 | 20-05-2015 | CN | 104412421 A | 11-03-2015 |
| | | | EP | 2874209 A1 | 20-05-2015 |
| | | | JP | 5541319 B2 | 09-07-2014 |
| | | | JP | 2014022074 A | 03-02-2014 |
| | | | US | 2015340681 A1 | 26-11-2015 |
| | | | WO | 2014010341 A1 | 16-01-2014 |
| JP H08162097 | A | 21-06-1996 | JP | 3544015 B2 | 21-07-2004 |
| | | | JP | H08162097 A | 21-06-1996 |

EPO FORM P0460

Pour tout renseignement concernant cette annexe : voir Journal Officiel de l'Office européen des brevets, No.12/82

## RÉFÉRENCES CITÉES DANS LA DESCRIPTION

**Documents brevets cités dans la description**

- US 20170133662 A
- CN 109728291

**Littérature non-brevet citée dans la description**

- **HITZ et al.** *Materials today,* 2019, vol. 22, 50-57
- **ZHAO et al.** *Nano Energy,* 2019, vol. 62, 55-63
- Les nanomatériaux. Institut national de recherche et de sécurité (INRS), Juin 2008
- **PARK, K. H. ; BAI, Q. ; KIM, D. H. ; OH, D. Y. ; ZHU, Y. ; MO, Y. ; JUNG, Y. S.** Design Strategies, Practical Considerations, and New Solution Processes of Sulfide Solid Electrolytes for All-Solid-State Batteries. *Advanced Energy Materials,* 2018, 1800035